# EUROPEAN PATENT SPECIFICATION

(11) **EP 1 413 069 B1**
(45) Date of publication and mention of the grant of the patent: **13.02.2008**
(21) Application number: 02748525.9
(22) Date of filing: 26.07.2002
(51) Int. Cl.: H04B 7/08

(54) **RECEPTION DIVERSITY COMBINER WITH SELECTABLE INVERSION AND VARIABLE GAIN**
DIVERSITÄT-EMPFANGSKOMBINATOR MIT WÄHLBARER PHASENINVERSION UND VARIABLER VERSTÄRKUNG
MELANGEUR POUR RECEPTION EN DIVERSITE A INVERSION SELECTIONNABLE ET GAIN VARIABLE

(30) Priority: 27.07.2001 US 307889 P; 06.02.2002 US 68120
(43) Date of publication of application: 28.04.2004
(73) Proprietor: Zarbaña Digital Fund, LLC, Wilmington New Castle County, DE 19808 (US)
(72) Inventor: WIGHT, James, Stuart, Ottawa, Ontario K1V 3M6 (CA)
(74) Representative: Dendorfer, Claus
(86) International application number: PCT/CA2002/001150
(87) International publication number: WO 2003/013023

(56) References cited:
- EP-A- 0 477 158
- US-A- 4 293 955
- US-A- 5 203 025
- CHUN-NING ZHANG ET AL: "A low-complexity antenna diversity receiver suitable for TDMA handset implementation" VEHICULAR TECHNOLOGY CONFERENCE, 1997, IEEE 47TH PHOENIX, AZ, USA 4-7 MAY 1997, NEW YORK, NY, USA,IEEE, US, 4 May 1997 (1997-05-04), pages 1753-1757, XP010229068 ISBN: 0-7803-3659-3

## Description

### Field of the Invention

The invention is in the field of diversity RF receivers and, more particularly, to combiner circuitry for use in such receivers.

### Background of the Invention

Signals arriving at a wireless communications device such as a cellular telephone are typically comprised of a complex amalgam of waves, some directly from the sending antenna and others reflected from stationary and moving objects. The resulting waveform is subject to cancellation or reinforcement in the amplitude domain as well as distortion in the time domain resulting from propagation delays over the varying length paths taken by reflected signals. These amplitude and time distortions are referred to as multi-path fading and they make decoding of the signals more difficult.

In data systems, such cancellations can erase portions of the desired bit stream and the duration of the erasure depends on various factors. Forward Error Correction (FEC) is a common technique for solving this erasure problem. Redundant information is added to the transmitted data to allow for a predicted level of erasures and recovery of the original data without retransmission. FEC is useful but as the bit rate increases, more and more redundancy must be added which leads to diminishing returns. The redundancy reduces the effective bit rate of the system.

Another solution to problems caused by multi-path fading is to use two independent channels, either by the use of two spatially separate receiving antennas ortwo orthogonally polarized receiving antennas. Diversity receiving systems generally use one of three different classes of techniques to combine the multiple received signals, being: (i) selection combining whereby the signal having the strongest carrier-to-noise ratio is chosen (this requires modest monitoring-and-control functions, but results in timing and phase dislocations that may adversely affect synchronization); (ii) maximal-ratio combining whereby the phases of the signals are aligned using a phase shifter and the magnitudes are adjusted using automatic gain controllers (AGC's) such that the gain applied to each signal is proportional to the signal magnitude and inversely proportional to the noise power (this requires very complicated monitoring-and-control functions, but does not result in any timing or phase dislocations); and, (iii) equal gain combining whereby the phases of the signals are aligned using a phase shifter and all signals are combined with equal gain regardless of the strength of any individual signal i.e. without any adjusting of magnitudes (this requires complicated monitoring-and-control functions but does not result in any timing or phase dislocations).

Also known is a post-demodulation equal gain combiner which achieves diversity combining without any amplitude or phase control (and, hence, does not require any monitoring-and-control functions) and without producing timing or phase dislocations. Disadvantageously, however, since it implements a post-demodulation process, it requires a duplication of all the receiver front-end circuitry including the demodulator. Further, its performance is not as good as the other combiners.

Of the foregoing three pre-demodulation combiners, the maximal-ratio combiner provides the best combined carrier-to-noise ratio and the equal gain combiner provides almost as good performance as the maximal ratio combiner. The selection combiner provides the least improvement in carrier-to-noise ratio.

Document EP-A-0 477 158 discloses a diversity receiver which determines the strength of the received and the combined signals and controls the gain of which whereby the received signals can be inverted.

Accordingly, there is a need for an effective means of optimally combining signals in a spatial diversity receiver which is effective but less complex than those of the prior art.

### Summary of the Invention

In accordance with the invention there is provided a combiner for a diversity radio receiver wherein inversion of either received signal is performed, on a selection basis, in order to maximize the resultant output signal. The strength of each diversity signal is monitored as well as the strength of the combined output signal. A gain control engine combines the stronger signal with either the inverted or non-inverted weaker signal to maximize the combined output (resultant) signal strength. Optionally, the combiner may also perform an amplitude adjustment based on in-channel noise for each received signal, whereby the strength of the signals as well as the in-channel noise power and the individual channel signal-to-noise ratios are used to adjust the amplifier gains.

In accordance with one aspect of the invention there is provided a combiner for combining a plurality of received diversity signals in a radio receiver and producing therefrom a combined output signal. A gain control engine is configured for determining the strengths of each received signal and the combined output signal. A gain controller is controlled by the gain control engine on the basis of the results of these determinations, whereby the gain controller inverts a weakest one of the received signals for combination with the other received signals when such inversion increases the strength of the combined output signal. The gain control engine makes a first determination of the strength of the combined output signal before the weakest received signal is inverted and a second determination of the strength of the combined output signal after the weakest received signal has been inverted, and the inversion of the weakest received signal is continued when the strength of the second determination increases over that of the first determination and is reversed when the strength of the second determination decreases over that of the first determination. The first and second determinations and inverting of the weaker signal are repeated either periodically or upon the occurrence of a reduction of the strength of the combined output signal by a predetermined amount.

Preferably, the gain control engine is configured for determining the noise in received signal channels and the controlling of the gain controller is based also on signal-to-noise ratios determined for the received signals, whereby each received signal is amplified by a gain proportional to the signal-to-noise ratio determined therefor. The gain controller in the preferred embodiment comprises an automatic gain controller (AGC) for each received signal and the gain control engine comprises a digital signal processor.

In accordance with another aspect of the invention there is provided a method for combining a plurality of received diversity signals in a radio receiver and producing therefrom a combined output signal. The strengths of each received signal and of the combined output signal are determined. The gain of the received signals is controlled on the basis of the results of these determinations, whereby a weakest one of the received signals is inverted for combination with the other received signals when such inversion increases the strength of the combined output signal. A first determination is made of the strength of the combined output signal before the weakest received signal is inverted and a second determination is made of the strength of the combined output signal after the weakest received signal has been inverted. The inversion of the weakest received signal is maintained when the strength of the second determination increases over that of the first determination and is reversed when the strength of the second determination decreases over that of the first determination. The first and second determinations and inverting of the weaker signal are repeated either periodically or upon the occurrence of a reduction of the strength of the combined output signal by a predetermined amount. Preferably, the noise in received signal channels is also determined and the gain is also controlled on the basis of the signal-to-noise ratios determined for the received signals, whereby each received signal is amplified by a gain proportional to the signal-to-noise ratio determined therefor.

### Brief Description of the Drawings

Preferred embodiments of the invention will now be described in detail with reference to the following drawings:
Figure 1 is a block diagram of components of a first embodiment of a radio receiver combiner circuit in accordance with the invention;

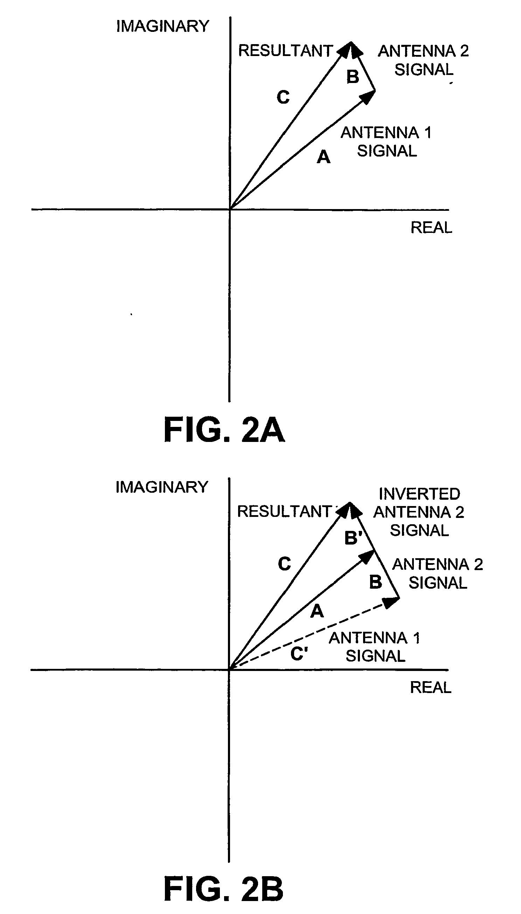

Figures 2 (a) and (b) are vector diagrams illustrating the addition of phasors which correspond to the received signal or the inverse of the received signal, whereby Figure 2(a) shows phasors corresponding to two received diversity signals (one from antenna 1 and another from antenna 2) which are added to produce a resultant signal which is stronger than either received signal alone and Figure 2(b) shows one phasor corresponding to one received diversity signal (from antenna 1) and another phasor corresponding to the amplitude inverted signal of the other received diversity signal (from antenna 2) to produce a resultant signal which is stronger than either received signal alone;
Figure 3 is a flow chart illustrating the steps performed by a gain control engine of the radio receiver combiner circuit of Figure 1;
Figure 4 is a block diagram of components of a second embodiment of a radio receiver combiner circuit in accordance with the invention; and,
Figure 5 is a flow chart illustrating the steps performed by a gain control engine of the radio receiver combiner circuit of Figure 4.

### Detailed Description of Illustrated Embodiments

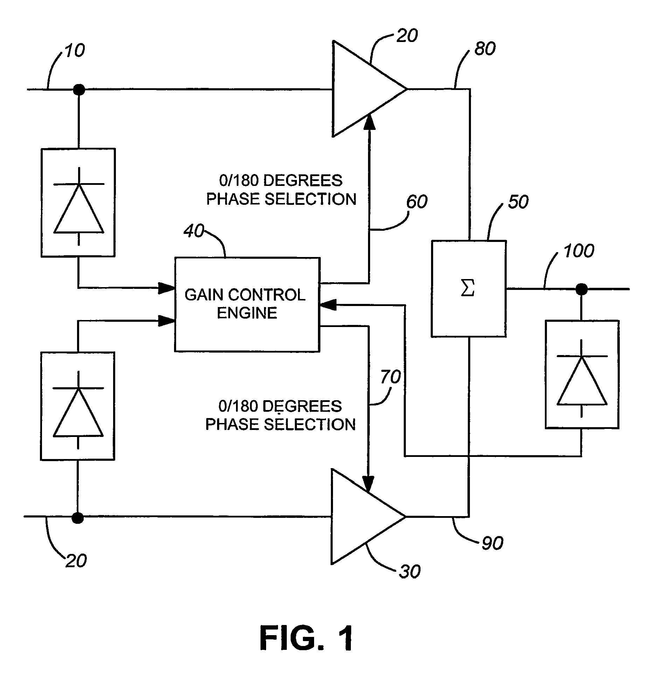

A first embodiment of a pre-demodulation selectable inversion combiner circuit in accordance with the invention is shown in Figure 1. Two received diversity signals 10, 20 are processed and analysed by means of a gain control engine 40 comprising digital signal processing means to produce control signals 60, 70 which are fed to a gain controller in the form of automatic gain controllers (AGC's) 20, 30 to modify the received signals 10,20 in a predetermined manner when this is determined to be appropriate. The modified signals 80,90 output from the AGC's 20,30 are then summed by an adder 50 to produce a combined output signal 100. The combined signal 100 is fed back and input to the gain control engine 40 for use in determining the gain to be applied to the received signals 10,20.

The gain control engine 40 may be in the form of a processor and software algorithm (e.g. a programmed digital signal processor) or may be provided by a computational logic circuit if it is desired to use a dedicated hardware implementation.

Figures 2(a) and (b) illustrate the manner by which the received signals 10,20 are processed and analysed by the combiner circuit. As shown, the combiner performs, on a selectable basis, amplitude inversion of either received signal in order to maximize the resultant output signal. Figure 2(a) shows an instance whereby the signals received from two different antennae (phasors A and B) can be added to produce a resultant combined signal (phasor C) which has a greater amplitude than either of the received signals. By contrast, Figure 2(b) shows a situation where the simple addition of two received signals (phasors A and B) would produce a combined signal (phasor C') which has a magnitude that is smaller than one of the input signals (phasor A). However, by inverting the smaller of the two input signals (phasor B) to produce a selected inversion signal corresponding thereto (phasor B'), and then adding the inverted signal and the larger of the two input signals (phasors A and B"), a resultant combined signal (phasor C) is produced which has a greater amplitude than either of the received signals.

This method of combining received diversity signals is advantageous over the prior art combiners because amplitude inversion circuitry is simpler to realize than phase shift circuitry and also because the monitoring-and-control functions of this combiner are simpler to realize than those required for phase alignment.

The selectable inversion combiner of Figure 1 monitors the strength of each diversity signal as well as the strength of the combined output signal. The gain control engine 40 combines the stronger signal with either the inverted or non-inverted weaker signal to maximize the combined output (resultant) signal strength.

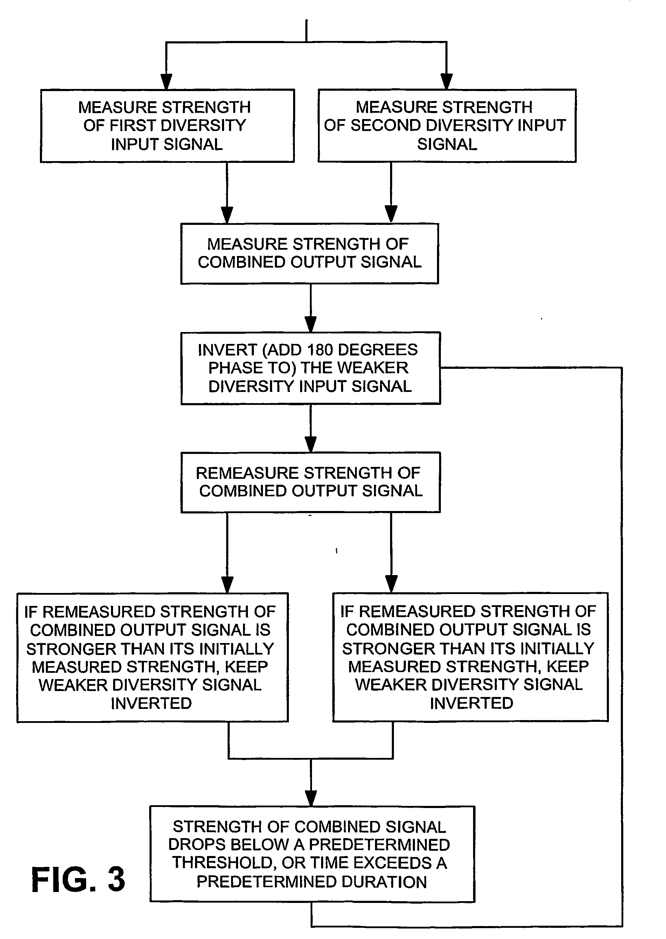

The flow chart of Figure 3 illustrates the steps performed by the gain control engine of the radio receiver combiner circuit of Figure 1. The strength of each received signal 10,20 is determined and, although not explicitly stated in the flowchart of Figure 3 it is to be noted that such determinations are performed on a regular and continuous basis in order for the weaker received signal to be identified as necessary during the performance of the combining process. The output combined signal 100 is also determined (measured). If one of the received signals 10,20 is weaker than the other it is inverted (i.e. it is multiplied by -1 to increase its phase by 180 degrees). The magnitude of the output signal 100 is then measured again and if it is stronger than the measurement obtained prior to phase-inverting the weaker received signal, the application of phase inversion to the weaker received signal is maintained such that the inverted signal is added to the other received signal. However, if the magnitude of the output signal 100 is measured to be weaker than the measurement obtained prior to phase-inverting the weaker received signal, the phase inversion is stopped so that the original received weaker signal is added to the other received signal. This maintenance, or stopping, of phase-inverting the weaker received signal, as the case may be, is continued until such time as either the strength of the combined output signal drops below a predetermined threshold or a predetermined duration of time has passed. On the occurrence of either such condition the phase of the weaker signal is inverted and a repeated cycling of the foregoing process of remeasuring the strength of the combined output signal and determining whether it is weaker or stronger than the last such measurement etc. is performed (as shown in Figure 3).

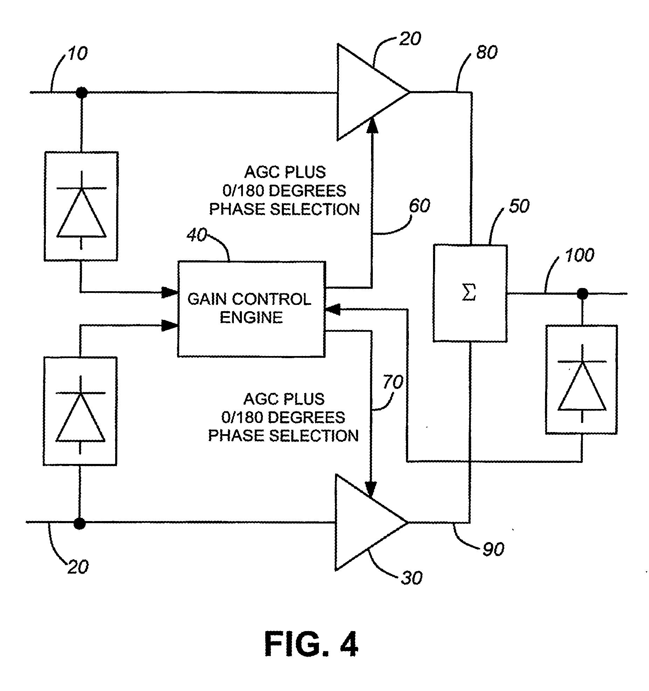

A second embodiment of a pre-demodulation selectable inversion / variable gain combiner circuit in accordance with the invention is shown in Figure 4. This combiner circuit performs a selectable amplitude inversion process on the weaker received as described above with reference to Figure 1 and, in addition, it performs an amplitude adjustment which contributes to the inversion selection process. In this embodiment the combiner monitors both the strengths of the received signals and the in-channel noise power, in similar manner to the conventional maximal ratio combiner, and the individual channel signal-to-noise ratios are used to adjust the amplifier gains. In one implementation of this embodiment, the individual amplifier gains are made proportional to the received signal amplitudes, and inversely proportional to the in-channel noise power, as is the case in a maximal-ratio combiner. The individual channel signal-to-noise ratios plus the strength of the combined output signal are used to decide whether to invert the weaker signal before combining the received signals. The gain control engine 40 combines the stronger signal with either the inverted or non-inverted weaker signal, as described above, to maximize the combined output signal strength 100.

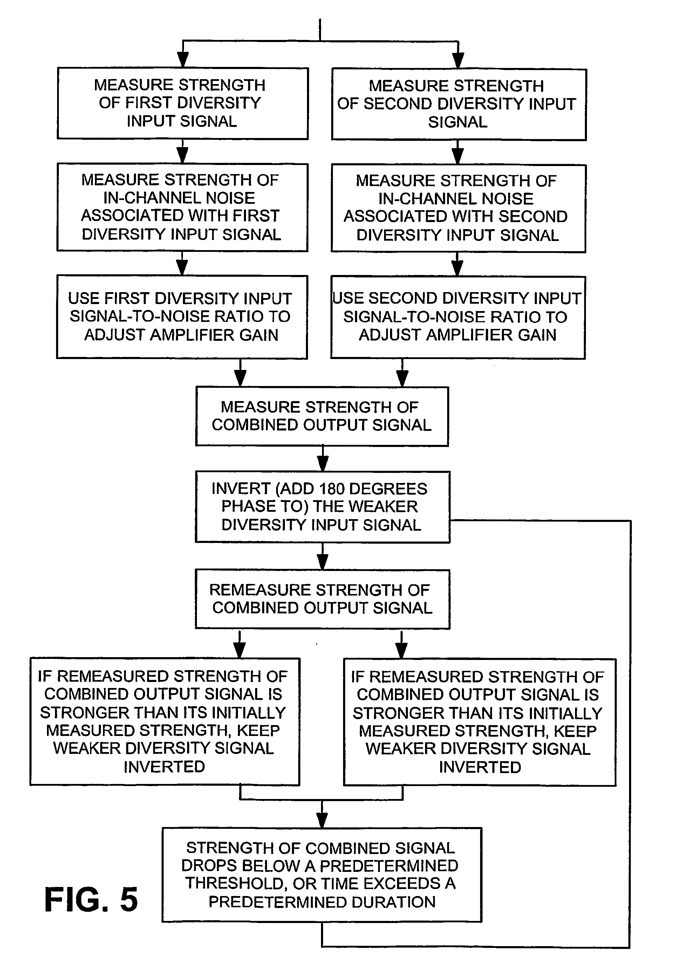

The flow chart of Figure 5 illustrating the steps performed by the gain control engine of the radio receiver combiner circuit of Figure 4. Measurements are taken of the strengths of each received signal 10,20 and the in-channel noise associated with each received signal. A gain adjustment value for each received signal is determined, and applied to the signal, on the basis of the signal-to-noise ratio applicable to that signal. Although not explicitly stated in the flowchart of Figure 5, it is to be noted that such determinations are performed on a regular and continuous basis in order for the weaker received signal to be identified as necessary during the performance of the combining process and in order for current (correct) signal-to-noise ratios to be used to adjust the amplifier (AGC) gains.

The combined output signal 100 is determined (measured). If one of the received signals 10,20 is weaker than the other it is inverted (i.e. it is multiplied by -1 to increase its phase by 180 degrees). The magnitude of the output signal 100 is then measured again and if it is stronger than the measurement obtained prior to phase-inverting the weaker received signal, the application of phase inversion to the weaker received signal is maintained such that the inverted signal is added to the other received signal. However, if the magnitude of the output signal 100 is measured to be weaker than the measurement obtained prior to phase-inverting the weaker received signal, the phase inversion is stopped so that the original received weaker signal is added to the other received signal. This maintenance, or stopping, of phase-inverting the weaker received signal, as the case may be, is continued until such time as either the strength of the combined output signal drops below a predetermined threshold or a predetermined duration of time has passed. On the occurrence of either such condition the phase of the weaker signal is inverted and a repeated cycling of the foregoing process of remeasuring the strength of the combined output signal and determining whether it is weaker or stronger than the last such measurement etc. is performed (as shown in Figure 5).

The individual electronic and processing functions utilised in the foregoing described embodiments are, individually, well understood by those skilled in the art. It is to be understood by the reader that a variety of other implementations may be devised by skilled persons for substitution. Persons skilled in the field of communication design will be readily able to apply the present invention to an appropriate implementation for a given application.

Consequently, it is to be understood that the particular embodiments shown and described herein by way of illustration are not intended to limit the scope of the invention claimed by the inventor which is defined by the appended claims.

## Claims

1. A combiner for combining a plurality of received diversity signals in a radio receiver and producing therefrom a combined output signal, said combiner comprising a gain control engine configured for determining the strength of each said received signal and said combined output signal and for controlling a gain controller on the basis of the results of said determinations, whereby said gain controller inverts a weakest one of said received signals for combination with the other said received signals when such inversion increases the strength of said combined output signal.

2. A combiner according to claim 1 wherein said gain control engine makes a first determination of the strength of said combined output signal before said weakest received signal is inverted and a second determination of the strength of said combined output signal after said weakest received signal has been inverted, and wherein said inversion of said weakest received signal is continued when said strength of said second determination increases over that of said first determination and is reversed when said strength of said second determination decreases over that of said first determination.

3. A combiner according to claim 2 wherein said first and second determinations and inverting of said weaker signal are repeated either periodically or upon the occurrence of a reduction of said strength of said combined output signal by a predetermined amount.

4. A combiner according to claim 3 wherein said gain control engine is configured for determining the noise in received signal channels and said controlling of said gain controller is based also on signal-to-noise ratios determined for said received signals whereby each said received signal is amplified by a gain proportional to said signal-to-noise ratio determined therefor.

5. A combiner according to claim 4 wherein said gain controller comprises an automatic gain controller (AGC) for each said received signal.

6. A combiner according to claim 5 wherein said gain control engine comprises a digital signal processor.

7. A method for combining a plurality of received diversity signals in a radio receiver and producing therefrom a combined output signal, said method comprising determining the strength of each said received signal and said combined output signal and controlling the gain of said received signals on the basis of the results of said determinations, whereby a weakest one of said received signals is inverted for combination with the other said received signals when such inversion increases the strength of said combined output signal.

8. A method according to claim 7 including making a first determination of the strength of said combined output signal before said weakest received signal is inverted and a second determination of the strength of said combined output signal after said weakest received signal has been inverted, and continuing said inversion of said weakest received signal when said strength of said second determination increases over that of said first determination and reversing said inversion of said weakest received signal when said strength of said second determination decreases over that of said first determination.

9. A method according to claim 8 whereby said first and second determinations and inverting of said weaker signal are repeated either periodically or upon the occurrence of a reduction of said strength of said combined output signal by a predetermined amount.

10. A method according to claim 9 including determining the noise in received signal channels and controlling said gain also on the basis of said signal-to-noise ratios determined for said received signals whereby each said received signal is amplified by a gain proportional to said signal-to-noise ratio determined therefor.

## Patentansprüche

1. Kombinator zum Kombinieren mehrerer empfangener Diversitätssignale in einem Funkempfänger und zum Erzeugen eines kombinierten Ausgangssignals hieraus, wobei der Kombinator umfasst: eine Verstärkungssteuereinheit, die dafür ausgelegt ist, die Stärke eines jeden empfangenen Signals und des kombinierten Ausgangssignals zu bestimmen und eine Verstärkungssteuerung auf der Grundlage der Ergebnisse dieser Bestimmungen zu steuern, wobei die Verstärkungssteuerung ein schwächstes der empfangenen Signale für die Kombination mit den anderen empfangenen Signalen invertiert, wenn eine solche Invertierung die Stärke des kombinierten Ausgangssignals erhöht.

2. Kombinator nach Anspruch 1, wobei die Verstärkungssteuereinheit eine erste Bestimmung der Stärke des kombinierten Ausgangssignals durchführt, bevor das schwächste empfangene Signal invertiert wird, und eine zweite Bestimmung der Stärke des kombinierten Ausgangssignals durchführt, nachdem das schwächste empfangene Signal invertiert worden ist, und wobei die Invertierung des schwächsten empfangenen Signals fortgesetzt wird, wenn die Stärke der zweiten Bestimmung diejenige der ersten Bestimmung übersteigt, und aufgehoben wird, wenn die Stärke der zweiten Bestimmung diejenige der ersten Bestimmung unterschreitet.

3. Kombinator nach Anspruch 2, wobei die erste und die zweite Bestimmung und das Invertieren des schwächeren Signals entweder periodisch oder bei Auftreten einer Verringerung der Stärke des kombinierten Ausgangssignals um ein vorgegebenes Maß wiederholt werden.

4. Kombinator nach Anspruch 3, wobei die Verstärkungssteuereinheit dafür ausgelegt ist, das Störsignal in Empfangssignalkanälen zu bestimmen, und die Steuerung der Verstärkungssteuerung auch auf den Störabständen beruht, die für die empfangenen Signale bestimmt werden, wobei jedes empfangene Signal mit einer Verstärkung proportional zu dem hierfür bestimmten Störabstand verstärkt wird.

5. Kombinator nach Anspruch 4, wobei die Verstärkungssteuerung eine automatische Verstärkungssteuerung (AGC) für jedes empfangene Signal umfasst.

6. Kombinator nach Anspruch 5, wobei die Verstärkungssteuereinheit einen digitalen Signalprozessor umfasst.

7. Verfahren zum Kombinieren mehrerer empfangener Diversitätssignale in einem Funkempfänger und zum Erzeugen eines kombinierten Ausgangssignals hieraus, wobei das Verfahren umfasst: Bestimmen der Stärke eines jeden empfangenen Signals und des kombinierten Ausgangssignals, und Steuern der Verstärkung der empfangenen Signale auf der Grundlage der Ergebnisse der Bestimmungen, wobei ein schwächstes der empfangenen Signale für eine Kombination mit den anderen empfangenen Signalen invertiert wird, wenn eine solche Invertierung die Stärke des kombinierten Ausgangssignals erhöht.

8. Verfahren nach Anspruch 7, das die Durchführung einer ersten Bestimmung der Stärke des kombinierten Ausgangssignals vor dem Invertieren des schwächsten empfangenen Signals und einer zweiten Bestimmung der Stärke des kombinierten Ausgangssignals nach dem Invertieren des schwächsten empfangenen Signals umfasst, sowie das Fortsetzen der Invertierung des schwächsten empfangenen Signals, wenn die Stärke der zweiten Bestimmung diejenige der ersten Bestimmung übersteigt, und das Aufheben der Invertierung des schwächsten empfangenen Signals, wenn die Stärke der zweiten Bestimmung diejenige der ersten Bestimmung unterschreitet.

9. Verfahren nach Anspruch 8, wobei die erste und die zweite Bestimmung und das Invertieren des schwächeren Signals entweder periodisch oder bei Auftreten einer Reduzierung der Stärke des kombinierten Ausgangssignals um ein vorgegebenes Maß wiederholt werden.

10. Verfahren nach Anspruch 9, das das Bestimmen des Störsignals in Empfangssignalkanälen umfasst, sowie das Steuern der Verstärkung auch auf der Grundlage der Störabstände, die für die empfangenen Signale bestimmt worden sind, wobei jedes empfangene Signal mit einer Verstärkung proportional zu dem hierfür bestimmen Störabstand verstärkt wird.

## Revendications

1. Mélangeur pour mélanger une pluralité de signaux reçus en diversité dans un récepteur radio, et pour produire à partir de là un signal de sortie combiné, ledit combineur comprenant un moteur de commande de gain qui est configuré pour déterminer la force de chacun desdits signaux reçus et dudit signal de sortie combiné, et pour commander un dispositif de commande de gain sur la base des résultats desdites déterminations, moyennant quoi ledit dispositif de commande de gain inverse un desdits signaux reçus en vue d'une combinaison avec l'autre desdits signaux reçus quand une telle inversion augmente la force dudit signal de sortie combiné.

2. Mélangeur selon la revendication 1, dans lequel ledit moteur de commande de gain accomplit une première détermination de la force dudit signal de sortie combiné avant que ledit signal reçu le plus faible ne soit inversé, et il accomplit une deuxième détermination de la force dudit signal de sortie combiné après que ledit signal reçu le plus faible a été inversé, et dans lequel ladite inversion dudit signal reçu le plus faible est poursuivie quand ladite force de ladite deuxième détermination augmente en dessus de celle de ladite première détermination, et elle est inversée quand ladite force de ladite deuxième détermination descend en dessous de celle de ladite première détermination.

3. Mélangeur selon la revendication 2, dans lequel lesdites première et deuxième déterminations, et ladite inversion dudit signal reçu le plus faible, sont répétées, soit périodiquement, soit au moment de la survenue d'une diminution de ladite force dudit signal de sortie combiné d'une quantité prédéterminée.

4. Mélangeur selon la revendication 3, dans lequel ledit moteur de commande de gain est configuré pour déterminer le bruit dans des canaux de signaux reçus, et ladite commande dudit dispositif de commande de gain est également basée sur des rapports de signal sur bruit déterminés pour lesdits signaux reçus, moyennant quoi chacun desdits signaux reçus est amplifié par un gain qui est proportionnel audit rapport de signal sur bruit déterminé pour lui.

5. Mélangeur selon la revendication 4, dans lequel ledit dispositif de commande de gain comprend un dispositif de commande automatique de gain (AGC) pour chacun desdits signaux reçus.

6. Mélangeur selon la revendication 5, dans lequel ledit moteur de commande de gain comprend un dispositif de traitement de signal numérique.

7. Procédé pour mélanger une pluralité de signaux reçus en diversité dans un récepteur radio, et pour produire à partir de là un signal de sortie combiné, ledit procédé comprenant les étapes consistant à déterminer la force de chacun desdits signaux reçus et dudit signal de sortie combiné, et à commander le gain desdits signaux reçus sur la base des résultats desdites déterminations, moyennant quoi un le plus faible desdits signaux reçus est inversé en vue d'une combinaison avec l'autre desdits signaux reçus quand une telle inversion augmente la force dudit signal de sortie combiné.

8. Procédé selon la revendication 7, comprenant les étapes consistant à accomplir une première détermination de la force dudit signal de sortie combiné avant que ledit signal reçu le plus faible ne soit inversé, et à accomplir une deuxième détermination de la force dudit signal de sortie combiné après que ledit signal reçu le plus faible a été inversé, et à poursuivre ladite inversion dudit signal reçu le plus faible quand ladite force de ladite deuxième détermination augmente en dessus de celle de ladite première détermination, et à inverser ladite inversion dudit signal reçu le plus faible quand ladite force de ladite deuxième détermination descend en dessous de celle de ladite première détermination.

9. Procédé selon la revendication 8, dans lequel lesdites première et deuxième déterminations, et ladite inversion dudit signal reçu le plus faible, sont répétées, soit périodiquement, soit au moment de la survenue d'une diminution de ladite force dudit signal de sortie combiné d'une quantité prédéterminée.

10. Procédé selon la revendication 9, comprenant les étapes consistant à déterminer le bruit dans des canaux de signaux reçus, et à commander ledit gain également sur la base desdits rapports de signal sur bruit déterminés pour lesdits signaux reçus, moyennant quoi chacun desdits signaux reçus est amplifié par un gain qui est proportionnel audit rapport de signal sur bruit déterminé pour lui.
